# EUROPÄISCHE PATENTSCHRIFT

(11) **EP 3 648 921 B1**
(45) Veröffentlichungstag und Bekanntmachung des Hinweises auf die Patenterteilung: **01.09.2021**
(21) Anmeldenummer: 18737569.6
(22) Anmeldetag: 02.07.2018
(51) Int. Cl.: B23K 3/08, B23K 1/20, B08B 9/032

(54) **VERFAHREN ZUM REINIGEN EINER LÖTDÜSE EINER LÖTANLAGE**
METHOD FOR CLEANING A SOLDERING NOZZLE OF A SOLDERING SYSTEM
PROCÉDÉ DE NETTOYAGE D'UNE BUSE DE SOUDURE D'UN SYSTÈME DE SOUDURE

(30) Priorität: 03.07.2017 DE 102017114801
(43) Veröffentlichungstag der Anmeldung: 13.05.2020
(73) Patentinhaber: Ersa GmbH, 97877 Wertheim (DE)
(72) Erfinder: VOELKER, Stefan, 97840 Hafenlohr (DE)
(74) Vertreter: DREISS Patentanwälte PartG mbB
(86) Internationale Anmeldenummer: PCT/EP2018/067794
(87) Internationale Veröffentlichungsnummer: WO 2019/007900

(56) Entgegenhaltungen:
- DE-A1- 10 243 769
- DE-B3- 10 353 936
- DE-U1-202009 002 666

## Beschreibung

Die Erfindung betrifft ein Verfahren zum Reinigen einer Lötdüse einer Lötanlage zum selektiven Wellenlöten, sowie einen Löttiegel, wobei die Lötanlage einen Löttiegel mit einem Lotreservoir, eine Lötdüse und eine Lotpumpe aufweist, wobei die Lotpumpe zum Fördern von flüssigem Lot aus dem Lotreservoir durch die Lötdüse zur Erzeugung einer stehenden Welle aus flüssigem Lot ausgebildet ist.

Lötanlagen zum selektiven Wellenlöten sind hinlänglich bekannt. Bei Lötanlagen zum selektiven Wellenlöten werden mittels einer stehenden Welle aus flüssigem Lot eine Unterseite einer Leiterplatte bzw. Kontaktpins von durch die Leiterplatte von der Oberseite hindurchgesteckte elektronische Bauteile verlötet.

Aus der DE 20 2009 002 666 U1 sind ein Verfahren gemäß dem Oberbegriff von Anspruch 1 zum Reinigen einer Lötdüse und eine Vorrichtung gemäß dem Oberbegriff von Anspruch 11 zur Reinigung und/oder Aktivierung von Lötdüsen bekannt, bei der Reinigungsmittel zu einer Lötdüse hin transportiert und auf die Lötdüse aufgebracht wird. Aus der DE 103 53 936 B3 ist ein Verfahren zum Entfernen von Oxidationsrückständen eines Lots bekannt. Aus der DE 102 43 769 A1 ist eine Vorrichtung zum Messen der Höhe einer Lötwelle bekannt.

Zur Erzeugung der stehenden Welle wird flüssiges Lot aus einem Lotreservoir eines Löttiegels mittels einer Lotpumpe durch die Lötdüse gefördert, so dass sich die stehende Welle ausbildet. Der Löttiegel kann dann numerisch gesteuert entlang einer vorgegebenen Bahn eines Lötprogramms verfahren werden, wobei die stehende Welle die Leiterplatte von ihrer Unterseite kontaktiert.

Bei Lötdüsen von Lötanlagen zum selektiven Wellenlöten tritt das Problem auf, dass die Lötdüsen mit der Zeit ihre ursprünglichen Eigenschaften verändern und verschmutzen, sie unterliegen einem sogenannten "Deaktivierungsprozess". Ein solcher "Deaktivierungsprozess" kann beispielsweise durch hohe Temperaturen, durch Verschmutzungen, welche durch Ablegierungen an einer Lötstelle verursacht werden, durch Abtragungen aus Lötstoplack und Leiterplattenmaterial, sowie durch eine veränderliche Stickstoffatmosphäre und aufschwimmende Oxide ausgelöst werden.

Durch einen derartigen "Deaktivierungsprozess" der Lötdüse kann die Lötqualität einer Lötanlage zum selektiven Wellenlöten schwanken, wobei Ausfälle an gelöteten Werkstücken aufgrund schlechter Lötstellen auftreten können.

Der Erfindung liegt daher die Aufgabe zugrunde, eine Möglichkeit bereitzustellen, mit welcher eine dauerhaft hohe Lötqualität gewährleistet werden kann, wobei die Lötdüsen einer Lötanlage zum selektiven Wellenlöten eine gleichbleibend homogene Benetzung behalten sollen.

Diese Aufgabe wird durch ein Verfahren zum Betreiben einer Lötanlage zum selektiven Wellenlöten mit den Merkmalen des Anspruchs 1 wie durch einen Löttiegel mit den Merkmalen des Patentanspruchs 11 gelöst.

Die Lotpumpe weist dabei eine variable Pumpenleistung auf.

Durch Abfließen des Reinigungsmittels über die Düsenoberkante des Düsenauslasses können Verunreinigungen auf der Außenseite der Lötdüse entfernt werden, so dass mit einem derartigen "Aktivierungsprozess" wieder eine homogene Benetzung der Lötdüse erreicht werden kann.

Vorteilhafterweise ist das Reinigungsmittel pulverförmig.

Als besonders vorteilhaft hat es sich dabei erwiesen, wenn das Reinigungsmittel nach dem Einbringen in den Düsenauslass verflüssigt und aufgekocht wird. Das Verflüssigen und Aufkochen des Reinigungsmittels kann vorteilhafterweise dadurch erfolgen, dass das Reinigungsmittel mit dem flüssigen Lot in Kontakt gebracht wird.

Weiterhin ist es vorteilhaft, wenn das Reinigungsmittel vor dem Erhöhen der Pumpenleistung verflüssigt wird.

Eine besonders vorteilhafte Weiterbildung des Verfahrens sieht vor, dass das Reinigungsmittel Adipinsäure ist.

Gemäß einer weiteren vorteilhaften Ausgestaltung des Verfahrens ist vorgesehen, dass das Erhöhen der Pumpenleistung von der ersten Pumpenleistung auf die zweite Pumpenleistung schrittweise oder linear erfolgt.

Dabei ist es denkbar, dass das Erhöhen der Pumpenleistung nach Ablauf eines vorbestimmten Zeitintervalls nach dem Einbringen des Reinigungsmittels erfolgt. Vorzugsweise erfolgt das Erhöhen der Pumpenleistung nach einem vorbestimmten Zeitintervall von etwa 1 bis etwa 20 Sekunden, weiter vorzugsweise von etwa 1 bis etwa 10 Sekunden. Vorteilhafterweise kann während dieses Zeitintervalls die pulverförmige Adipinsäure verflüssigt werden. Es ist ferner möglich, dass das Erhöhen der Pumpenleistung von der ersten Pumpenleistung auf die zweite Pumpenleistung in einem vorbestimmten Zeitraum erfolgt. Vorzugsweise erfolgt das Erhöhen der Pumpenleistung von der ersten Pumpenleistung auf die zweite Pumpenleistung in einem vorbestimmten Zeitraum von etwa 1 bis etwa 20 Sekunden, weiter vorzugsweise von etwa 1 bis etwa 10 Sekunden.

Um eine besonders gründliche Reinigung der Lötdüse und somit auch eine gleichbleibend homogene Benetzung der Lötdüse erreichen zu können, hat es sich als vorteilhaft erwiesen, wenn das Reinigungsmittel nach dem Erhöhen der Pumpenleistung über die gesamte Außenseite der Lötdüse fließt.

Vorteilhafterweise bricht das Reinigungsmittel insbesondere beim Abfließen über die Außenseite der Lötdüse, Ablagerungen, insbesondere Oxidablagerungen, auf der Außenseite der Lötdüse auf.

Um eine gleichbleibend und dauerhaft hohe Lötqualität in einer Lötanlage zum selektiven Wellenlöten gewährleisten zu können, hat es sich als vorteilhaft erwiesen, wenn das Verfahren in einem vorgegebenen Reinigungsintervall, nach Bearbeitung einer vorgegebenen Anzahl an Leiterplatten und/oder nach einer optischen Beurteilung der Lötdüse automatisiert erfolgt.

Dabei ist es denkbar, dass der Löttiegel zur Durchführung des Verfahrens in eine Reinigungsposition verfahren wird. In der Reinigungsposition kann dann das Reinigungsmittel automatisiert oder manuell in den Düsenauslass eingebracht werden.

Weitere Einzelheiten und vorteilhafte Weiterbildungen sind der nachfolgenden Beschreibung zu entnehmen, anhand derer eine Ausführungsform der Erfindung näher beschrieben und erläutert ist.

Es zeigen:
- Figur 1: einen Ausschnitt eines Schnitts durch einen Löttiegel einer Lötanlage zum selektiven Wellenlöten im Betrieb des Löttiegels;
- Figur 2: den Ausschnitt gemäß Figur 1 bei Durchführung eines ersten Schritts eines erfindungsgemäßen Verfahrens;
- Figur 3: den Ausschnitt gemäß Figur 1 bei Durchführung eines auf den Schritt von Figur 2 folgenden Verfahrensschritts;
- Figur 4: den Ausschnitt gemäß Figur 1 bei Durchführung des Verfahrensschritts von Figur 3 in zeitlichem Abstand zum in Figur 3 gezeigten Zustand.

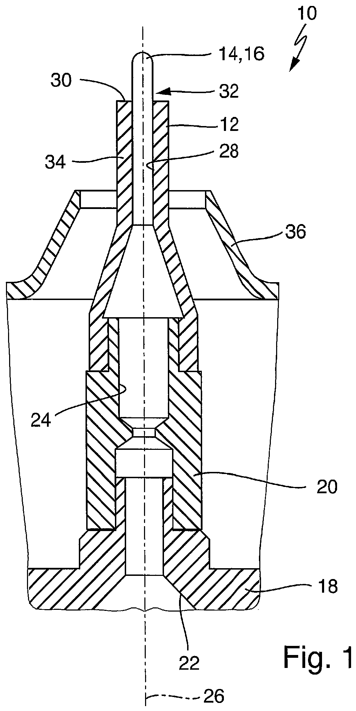

In den Figuren 1 bis 4 ist jeweils ein Ausschnitt eines Schnitts durch einen Löttiegel 10 einer in den Figuren nicht in ihrer Gesamtheit gezeigten Lötanlage zum selektiven Wellenlöten gezeigt. Sich in den Figuren 1 bis 4 entsprechende Elemente sind mit den sich entsprechenden Bezugszeichen gekennzeichnet.

Der Löttiegel 10 weist ein in den Figuren nicht gezeigtes Lotreservoir, eine Lötdüse 12 sowie eine in den Figuren ebenfalls nicht gezeigte Lotpumpe auf.

Figur 1 zeigt den Löttiegel 10 im Betrieb, wobei die Lotpumpe, welche zum Fördern von flüssigem Lot 14 aus dem Lotreservoir durch die Lötdüse 12 ausgebildet ist, das flüssige Lot 14 derart durch die Lötdüse 12 fördert, dass eine erste stehende Welle 16 aus flüssigem Lot 14 erzeugt wird.

Mit einer derartigen ersten stehenden Welle 16 können bei Lötanlagen zum selektiven Wellenlöten eine Unterseite einer Leiterplatte bzw. Kontaktpins von durch die Leiterplatte von der Oberseite hindurchgesteckten elektronischen Bauteilen verlötet werden.
Der Löttiegel 10 kann hierzu numerisch gesteuert entlang einer vorgegebenen Bahn eines Lötprogramms verfahren werden.

Bei den in den Figuren 1 bis 4 gezeigten Lötdüsen 12 der Löttiegel 10 kann das Problem auftreten, dass die Lötdüsen 12 mit der Zeit ihre ursprünglichen Eigenschaften verändern und verschmutzen. Dieser Vorgang wird in Fachkreisen auch als "Deaktivierungsprozess" bezeichnet. Ein solcher "Deaktivierungsprozess" kann beispielsweise durch hohe Temperaturen, durch Verschmutzungen, welche durch Ablegierungen an einer Lötstelle verursacht werden, durch Abtragungen aus Lötstoplack und Leiterplattenmaterial, sowie durch eine veränderliche Stickstoffatmosphäre und aufschwimmende Oxide ausgelöst werden.

Durch einen derartigen "Deaktivierungsprozess" der Lötdüse kann die Lötqualität einer Lötanlage zum selektiven Wellenlöten schwanken, wobei Ausfälle an gelöteten Werkstücken aufgrund schlechter Lotstellen auftreten können.

Wie in den Figuren 1 bis 4 deutlich zu erkennen ist, weist der Löttiegel 10 einen Grundteil 18 und einen Düsensockel 20 auf, an welchem die Lötdüse 12 angeordnet ist. Der Grundteil 18 weist einen Kanal 22 auf, wobei der Düsensockel 20 ebenfalls einen Kanal 24 aufweist, der axial fluchtend zum Kanal 22 entlang einer Mittelachse 26 der Lötdüse 12 angeordnet ist. Der Kanal 20 des Düsensockels 20 ist wiederum axial fluchtend entlang der Mittelachse 26 der Lötdüse 12 zu einem Kanal 28 der Lötdüse 12 angeordnet, welcher an einer Düsenoberkante 30 der Lötdüse in einem Düsenauslass 32 mit kreisförmigem Querschnitt mündet. Die Lötdüse 12 wird Umfangsbereich einer Außenseite 34 der Lötdüse 12 von einer Abdeckung 36 umgeben, die als kegeliger Ring ausgebildet ist.

Um eine dauerhaft hohe Lötqualität gewährleistet zu können, soll die Lötdüse 12 der Lötanlage zum selektiven Wellenlöten eine gleichbleibend homogene Benetzung behalten.

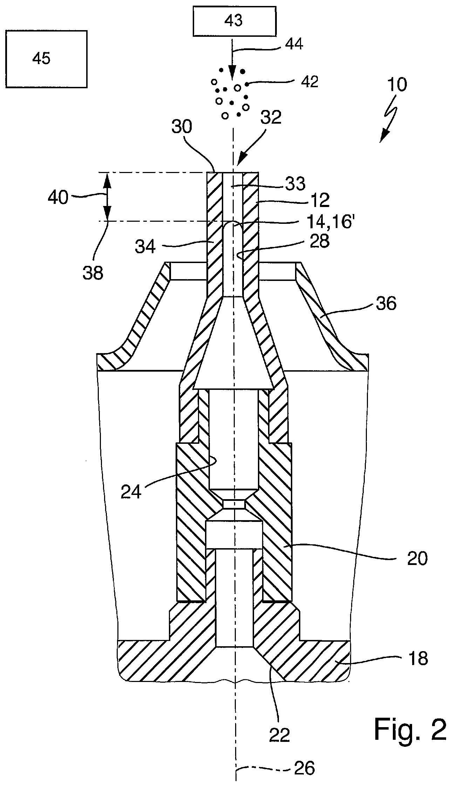

In den Figuren 2 bis 4 sind daher verschiedene Verfahrensschritte eines erfindungsgemäßen Verfahrens zum Betreiben einer Lötanlage zum selektiven Wellenlöten, insbesondere eines Verfahrens zum Reinigen einer Lötdüse 12 gezeigt.

Beim in Figur 2 gezeigten Verfahrensschritt wird Lot aus dem Lotreservoir mit einer ersten Pumpenleistung gefördert, die derart eingestellt ist, dass eine zweite stehende Welle 16' aus flüssigem Lot 14 mit einem Lotspiegel 38 erzeugt wird, der in einem Abstand 40 unterhalb der Düsenoberkante 30 des Düsenauslasses 32 der Lötdüse 12 angeordnet ist. Dadurch wird zwischen der Oberkante 30 und der Oberfläche der zweiten stehenden Welle 16' ein Aufnahmereservoir 33 gebildet.

In einem daran anschließenden Verfahrensschritt wird ein Reinigungsmittel in Form von pulverförmiger Adipinsäure 42 mittels einer Einbringungseinrichtung 43 in Richtung des in Figur 2 gezeigten Pfeils 44 in den Düsenauslass 32 auf die zweite stehende Welle 16', also in das Aufnahmereservat 33 in der Lötdüse 12 eingebracht.

In der Figur 2 ist eine Steuereinrichtung 45 zur Steuerung der Pumpenleiste der Lotpumpe und der Einbringungseinrichtung 43 gezeigt.

Nach dem Einbringen der pulverförmigen Adipinsäure 42 in das Aufnahmereservat 33 bzw. in den Düsenauslass 32 wird die Adipinsäure 42 durch den Kontakt mit dem heißen Lot 14 verflüssigt und aufgekocht.

Anschließend wird die Pumpenleistung der Lotpumpe schrittweise oder linear nach Ablauf eines vorbestimmten Zeitintervalls nach dem Einbringen der Adipinsäure 42 erhöht. Diese Erhöhung findet insbesondere in einem vorbestimmten Zeitraum statt.

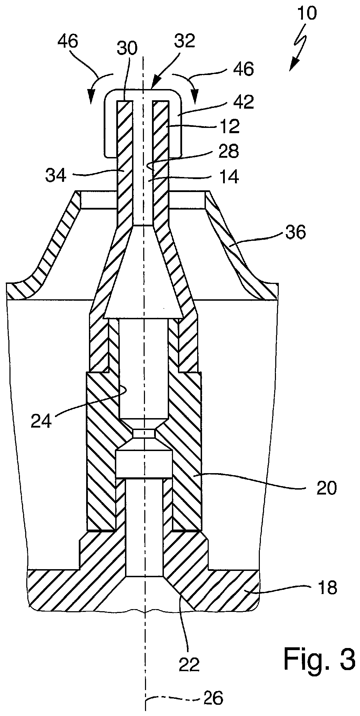

Die Pumpenleistung wird dabei so auf die zweite Pumpenleistung erhöht, dass die verflüssigte und aufgekochte Adipinsäure 42 über die Düsenoberkante 30 des Düsenauslasses 32 derart abfließt, dass die Adipinsäure 42 zur Außenseite 34 der Lötdüse 12 in Richtung der in Figur 3 gezeigten Pfeile 46 geleitet wird.

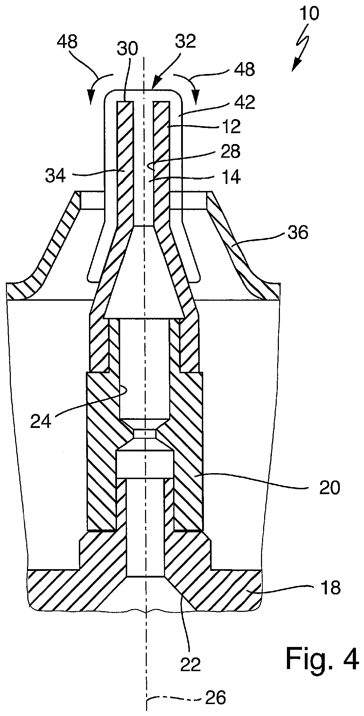

Wie in Figur 4 gezeigt ist, fließt die verflüssigte und aufgekochte Adipinsäure 42 über die gesamte Außenseite 34 der Lötdüse 12 in Richtung der Pfeile 48 ab, wobei Verunreinigungen auf der Außenseite 34 der Lötdüse 12 entfernt werden. Die Adipinsäure 42 bricht beim Abfließen über die Außenseite 34 der Lötdüse 12 Ablagerungen, insbesondere Oxidablagerungen, auf der Außenseite 34 der Lötdüse 12 auf.

Mit einem derartigen "Aktivierungsprozess" kann wieder eine homogene Benetzung der Lötdüse 12 erreicht werden. Um eine gleichbleibend und dauerhaft hohe Lötqualität in einer Lötanlage zum selektiven Wellenlöten gewährleisten zu können, kann das Verfahren in einem vorgegebenen Reinigungsintervall, nach Bearbeitung einer vorgegebenen Anzahl an Leiterplatten und/oder nach einer optischen Beurteilung der Lötdüse 12 automatisiert erfolgen.

Dabei ist es denkbar, dass der Löttiegel 10 zur Durchführung des Verfahrens in eine Reinigungsposition innerhalb der Lötanlage verfahren wird, wobei die Adipinsäure 42 in der Reinigungsposition automatisiert mittels einer in den Figuren nicht gezeigten Dosiereinrichtung oder manuell durch einen Bediener in den Düsenauslass 32 eingebracht werden kann.

## Patentansprüche

1. Verfahren zum Reinigen einer Lötdüse (12) einer Lötanlage zum selektiven Wellenlöten, wobei die Lötanlage wenigstens einen Löttiegel (10) mit einem Lotreservoir, der Lötdüse (12) und einer Lotpumpe aufweist, wobei die Lotpumpe zum Fördern von flüssigem Lot (14) aus dem Lotreservoir durch die Lötdüse (12) zur Erzeugung einer stehenden ersten Welle (16) aus flüssigem Lot (14) ausgebildet ist, **gekennzeichnet durch** die folgenden Schritte:
- Fördern von Lot aus dem Lotreservoir mit einer ersten Pumpenleistung die derart eingestellt ist, dass eine zweite stehende Welle (16') aus flüssigem Lot (14) mit einem Lotspiegel (38) erzeugt wird, der unterhalb einer Düsenoberkante (30) eines Düsenauslasses (32) der Lötdüse (12) angeordnet ist;
- Einbringen eines Reinigungsmittels (42) in den Düsenauslass (32) der Lötdüse (12) auf die zweite stehende Welle (16'), wodurch das Reinigungsmittel (42) verflüssigt wird;
- Erhöhen der Pumpenleistung der Lotpumpe auf eine zweite Pumpenleistung, so dass das Reinigungsmittel (42) über die Düsenoberkante (30) des Düsenauslasses (32) derart abfließt, dass das Reinigungsmittel (42) zu einer Außenseite (34) der Lötdüse (12) geleitet wird.

2. Verfahren nach Anspruch 1, wobei das Reinigungsmittel (42) pulverförmig ist.

3. Verfahren nach Anspruch 1 oder 2, wobei das Reinigungsmittel (42) nach dem Einbringen in den Düsenauslass (32) aufgekocht wird.

4. Verfahren nach wenigstens einem der vorherigen Ansprüche, wobei das Reinigungsmittel Adipinsäure (42) ist.

5. Verfahren nach wenigstens einem der vorherigen Ansprüche, wobei das Erhöhen der Pumpenleistung von der ersten Pumpenleistung auf die zweite Pumpenleistung schrittweise oder linear erfolgt.

6. Verfahren nach wenigstens einem der vorherigen Ansprüche, wobei das Erhöhen der Pumpenleistung nach Ablauf eines vorbestimmten Zeitintervalls nach dem Einbringen des Reinigungsmittels (42) erfolgt.

7. Verfahren nach wenigstens einem der vorherigen Ansprüche, wobei das Reinigungsmittel (42) nach dem Erhöhen der Pumpenleistung über die gesamte Außenseite (34) der Lötdüse (12) fließt.

8. Verfahren nach wenigstens einem der vorherigen Ansprüche, wobei das Reinigungsmittel (42) Ablagerungen, insbesondere Oxidablagerungen, auf der Außenseite (34) der Lötdüse (12) aufbricht.

9. Verfahren nach wenigstens einem der vorherigen Ansprüche, wobei das Verfahren in einem vorgegebenen Reinigungsintervall, nach Bearbeitung einer vorgegebenen Anzahl an Leiterplatten und/oder nach einer optischen Beurteilung der Lötdüse (12) automatisiert erfolgt.

10. Verfahren nach wenigstens einem der vorherigen Ansprüche, wobei der Löttiegel (10) zur Durchführung des Verfahrens in eine Reinigungsposition verfahren wird.

11. Löttiegel (10) für eine Lötanlage zum selektiven Wellenlöten, mit einem Lotreservoir, einer Lötdüse (12) und einer Lotpumpe, wobei die Lotpumpe zum Fördern von flüssigem Lot (14) aus dem Lotreservoir durch die Lötdüse (12) zur Erzeugung einer stehenden ersten Welle (16) aus flüssigem Lot (14) ausgebildet ist, mit einer Einbringeinrichtung (43) zum Einbringen eines Reinigungsmittels in die Lötdüse (12), mit einer Steuereinrichtung (45) zur Steuerung der Pumpenleistung der Lotpumpe und der Einbringeinrichtung (43), **dadurch gekennzeichnet, dass** die Steuereinrichtung (45) zur Durchführung eines Verfahrens zur Reinigung der Lötdüse ausgebildet und eingerichtet ist, umfassend die folgenden Schritte:
- Fördern von Lot aus dem Lotreservoir mit einer ersten Pumpenleistung, die derart eingestellt ist, dass eine zweite stehende Welle (16') aus flüssigem Lot (14) mit einem Lotspiegel (38) erzeugt wird, der unterhalb einer Düsenoberkante (30) eines Düsenauslasses (32) der Lötdüse (12) angeordnet ist;
- Einbringen eines Reinigungsmittels (42) in den Düsenauslass (32) der Lötdüse (12) auf die zweite stehende Welle (16'), wodurch das Reinigungsmittel (42) verflüssigt wird;
- Erhöhen der Pumpenleistung der Lotpumpe auf eine zweite Pumpenleistung, so dass das Reinigungsmittel (42) über die Düsenoberkante (30) des Düsenauslasses (32) derart abfließt, dass das Reinigungsmittel (42) zu einer Außenseite (34) der Lötdüse (12) geleitet wird.

12. Löttiegel nach Anspruch 11, **dadurch gekennzeichnet, dass** die Steuereinrichtung zur Durchführung eines Verfahrens nach einem der Ansprüche 2 bis 10 ausgebildet und eingerichtet ist.

## Claims

1. Method for cleaning a soldering nozzle (12) of a soldering apparatus for selective wave soldering, wherein the soldering apparatus comprises at least one soldering pan (10) with a solder reservoir, the soldering nozzle (12) and a solder pump, wherein the solder pump is configured for conveying liquid solder (14) from the solder reservoir through the soldering nozzle (12) for generating a first standing wave (16) of liquid solder (14), **characterized by** the following steps:
- conveying solder from the solder reservoir with a first pump power which is adjusted such that a second standing wave (16') of liquid solder (14) is generated with a solder surface (38) which is located below a nozzle top edge (30) of a nozzle outlet (32) of the soldering nozzle (12);
- introducing a cleaning agent (42) into the nozzle outlet (32) of the solder nozzle (12) onto the second standing wave (16') thus liquefying the cleaning agent (42);
- raising the pump power of the solder pump to a second pump power so that the cleaning agent (42) flows off over the nozzle top edge (30) of the nozzle outlet (32) in such a way that the cleaning agent (42) is directed to an outside (34) of the soldering nozzle (12).

2. Method as claimed in claim 1, wherein the cleaning agent (42) is powdery.

3. Method as claimed in claim 1 or 2, wherein the cleaning agent (42) is boiled after insertion into the nozzle outlet (32) .

4. Method as claimed in at least one of the preceding claims, wherein the cleaning agent is adipic acid (42).

5. Method as claimed in at least one of the preceding claims, wherein raising the pump power from the first pump power to the second pump power is performed stepwise or linearly.

6. Method as claimed in at least one of the preceding claims, wherein raising the pump power is performed after a predetermined time interval after insertion of the cleaning agent (42) has passed.

7. Method as claimed in at least one of the preceding claims, wherein the cleaning agent (42) flows over the entire outside (34) of the soldering nozzle (12) after the pump power has been raised.

8. Method as claimed in at least one of the preceding claims, wherein the cleaning agent (42) breaks up deposits, in particular oxide deposits on the outside (34) of the soldering nozzle (12).

9. Method as claimed in at least one of the preceding claims, wherein the method is performed automatically in a predetermined cleaning interval, after processing a predetermined number of circuit boards and/or after an optical evaluation of the soldering nozzle (12).

10. Method as claimed in at least one of the preceding claims, wherein the soldering pan (10) is moved into a cleaning position for performing the method.

11. Soldering pan (10) for a soldering apparatus for selective wave soldering, with a solder reservoir, a soldering nozzle (12) and a solder pump, wherein the solder pump is configured for conveying liquid solder (14) from the solder reservoir through the soldering nozzle (12) for generating a first standing wave (16) of liquid solder (14), with an introducing device (43) for introducing a cleaning agent into the soldering nozzle (12), with a controller (45) for controlling the pump power of the soldering pump and the introducing device (43), **characterized in that** the controller (45) is adapted and arranged for performing a method for cleaning the soldering nozzle, comprising the following steps:
- conveying solder from the solder reservoir with a first pump power which is adjusted such that a second standing wave (16') of liquid solder (14) is generated with a solder surface (38) which is located below a nozzle top edge (30) of a nozzle outlet (32) of the soldering nozzle (12);
- introducing a cleaning agent (42) into the nozzle outlet (32) of the solder nozzle (12) onto the second standing wave (16') thus liquefying the cleaning agent (42);
- raising the pump power of the solder pump to a second pump power so that the cleaning agent (42) flows off over the nozzle top edge (30) of the nozzle outlet (32) in such a way that the cleaning agent (42) is directed to an outside (34) of the soldering nozzle (12).

12. Soldering pan as claimed in claim 11, **characterized in that** the controller is adapted and arranged for performing a method as claimed in one of claims 2 to 10.

## Revendications

1. Procédé pour nettoyer une buse de brasage (12) d'une installation de brasage pour le brasage à la vague sélectif, dans lequel l'installation de brasage présente au moins un creuset de brasage (10) avec un réservoir de métal d'apport de brasage, la buse de brasage (12) et une pompe à métal d'apport de brasage, dans lequel la pompe à métal d'apport de brasage est réalisée pour refouler le métal d'apport de brasage liquide (14) à partir du réservoir de métal d'apport de brasage à travers la buse de brasage (12) pour la production d'une première vague stationnaire (16) de métal d'apport de brasage liquide (14), **caractérisé par** les étapes suivantes :
- le refoulement de métal d'apport de brasage à partir du réservoir de métal d'apport de brasage avec une première puissance de pompage qui est réglée de telle sorte qu'une deuxième vague stationnaire (16') de métal d'apport de brasage liquide (14) est produite avec un niveau de métal d'apport de brasage (38) qui est situé au-dessous d'un bord supérieur de buse (30) d'une sortie de buse (32) de la buse de brasage (12) ;
- l'introduction d'un produit de nettoyage (42) dans la sortie de buse (32) de la buse de brasage (12) sur la deuxième vague stationnaire (16'), ce qui a pour effet que le produit de nettoyage (42) est liquéfié ;
- l'augmentation de la puissance de pompage de la pompe à métal d'apport de brasage à une deuxième puissance de pompage, de sorte que le produit de nettoyage (42) s'écoule au-dessus du bord supérieur de buse (30) de la sortie de buse (32), de telle sorte que le produit de nettoyage (42) est dirigé vers une face extérieure (34) de la buse de brasage (12) .

2. Procédé selon la revendication 1, dans lequel le produit de nettoyage (42) est pulvérulent.

3. Procédé selon la revendication 1 ou 2, dans lequel le produit de nettoyage (42) est bouilli après l'introduction dans la sortie de buse (32).

4. Procédé selon au moins l'une des revendications précédentes, dans lequel le produit de nettoyage est de l'acide adipique (42).

5. Procédé selon au moins l'une des revendications précédentes, dans lequel l'augmentation de la puissance de pompage de la première puissance de pompage à la deuxième puissance de pompage s'effectue progressivement ou linéairement.

6. Procédé selon au moins l'une des revendications précédentes, dans lequel l'augmentation de la puissance de pompage s'effectue après écoulement d'un intervalle de temps prédéfini après l'introduction du produit de nettoyage (42).

7. Procédé selon au moins l'une des revendications précédentes, dans lequel le produit de nettoyage (42) s'écoule après l'augmentation de la puissance de pompage sur toute la surface extérieure (34) de la buse de brasage (12).

8. Procédé selon au moins l'une des revendications précédentes, dans lequel le produit de nettoyage (42) brise des dépôts, en particulier des dépôts d'oxyde, sur la face extérieure (34) de la buse de brasage (12).

9. Procédé selon au moins l'une des revendications précédentes, dans lequel le procédé s'effectue de manière automatisée dans un intervalle de nettoyage prédéfini, après usinage d'un nombre prédéfini de cartes de circuits imprimés et/ou après une évaluation optique de la buse de brasage (12).

10. Procédé selon au moins l'une des revendications précédentes, dans lequel le creuset de brasage (10) est déplacé dans une position de nettoyage pour la mise en œuvre du procédé.

11. Creuset de brasage (10) pour une installation de brasage pour le brasage à la vague sélectif, avec un réservoir de métal d'apport de brasage, une buse de brasage (12) et une pompe à métal d'apport de brasage, dans lequel la pompe à métal d'apport de brasage est réalisée pour refouler le métal d'apport de brasage liquide (14) à partir du réservoir de métal d'apport de brasage à travers la buse de brasage (12) pour la production d'une première vague stationnaire (16) de métal d'apport de brasage liquide (14), avec un dispositif d'introduction (43) pour l'introduction d'un produit de nettoyage dans la buse de brasage (12), avec un dispositif de commande (45) pour la commande de la puissance de pompage de la pompe à métal d'apport de brasage et du dispositif d'introduction (43), **caractérisé en ce que** le dispositif de commande (45) est réalisé et conçu pour la mise en œuvre d'un procédé pour le nettoyage de la buse de brasage, comprenant les étapes suivantes :
- le refoulement de métal d'apport de brasage à partir du réservoir de métal d'apport de brasage avec une première puissance de pompage qui est réglée de telle sorte qu'une deuxième vague stationnaire (16') de métal d'apport de brasage liquide (14) est produite avec un niveau de métal d'apport de brasage (38) qui est situé au-dessous d'un bord supérieur de buse (30) d'une sortie de buse (32) de la buse de brasage (12) ;
- l'introduction d'un produit de nettoyage (42) dans la sortie de buse (32) de la buse de brasage (12) sur la deuxième vague stationnaire (16'), ce qui a pour effet que le produit de nettoyage (42) est liquéfié ;
- l'augmentation de la puissance de pompage de la pompe à métal d'apport de brasage à une deuxième puissance de pompage, de sorte que le produit de nettoyage (42) s'écoule au-dessus du bord supérieur de buse (30) de la sortie de buse (32), de telle sorte que le produit de nettoyage (42) est dirigé vers une face extérieure (34) de la buse de brasage (12) .

12. Creuset de brasage selon la revendication 11, **caractérisé en ce que** le dispositif de commande est réalisé et conçu pour la mise en œuvre d'un procédé selon l'une quelconque des revendications 2 à 10.
